Europäisches Patentamt

European Patent Office

Office européen des brevets

(11) Publication number: **0 248 392**
**A2**

## EUROPEAN PATENT APPLICATION

(21) Application number: **87107929.9**

(22) Date of filing: **02.06.87**

(51) Int. Cl.⁴: **B01D 13/04 , B01D 53/22**

(30) Priority: **06.06.86 US 872342**

(43) Date of publication of application:
**09.12.87 Bulletin 87/50**

(84) Designated Contracting States:
**BE CH DE FR GB IT LI NL**

(71) Applicant: **PPG INDUSTRIES, INC.**
**One PPG Place**
**Pittsburgh Pennsylvania 15272(US)**

(72) Inventor: **Hammel, Joseph John**
**201 Cornwall Drive**
**Pittsburgh, Pa.15238(US)**
Inventor: **Marshall, William Patrick**
**15 Mildred Street**
**Pittsburgh, PA. 15223(US)**
Inventor: **Robertson, Walter James**
**19 Third Street**
**Aspinwall, Pa. 15215(US)**
Inventor: **Barch, Herbert William**
**1306 Dallas Avenue**
**Natrona Heights, Pa. 15065(US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2(DE)**

(54) **Porous inorganic siliceous-containing gas enriching material and process of manufacture and use.**

(57) A hollow, porous, silica-rich fiber and a process for separating at least one gas from a gaseous mixture utilizing the hollow, porous, silica-rich fiber result in gas separations with good permeability and good selectivity. The hollow, porous, silica-rich fiber is non-crystalline and has pore sizes having a range of 1 to around 50 Angstroms in diameter and a mean pore size of around 5 to 50 Angstroms in diameter and a filament diameter in the range of 1 to around 200 microns and wall thickness in the range of around 1 to 30 microns. The hollow, porous, silica-rich fibers with a fine pore structure and thin walls are produced by forming hollow glass fibers by attenuation from melt at speeds in the range of 500 ft/min to around 20,000 ft/min and having a glass composition which is a non-phase separable fiberizable glass composition, a phase separable borosilicate having one or more oxides of a metal from Group IVB of the Periodic Table, a phase-separable glass composition with an amount of boron oxide of less than 20 weight percent up to around 60 weight percent, and alkali metal oxide silicate glass compositions. The non-heat treated glass fibers are leached to extract acid and/or water soluble components. At least one hollow, porous, silica-rich fiber is used in a device suitable to contain a gaseous mixture and the permeate is withdrawn from the glass fiber from the opposite side from that at which the gaseous mixture contacts the hollow, porous fiber.

# POROUS INORGANIC SILICEOUS-CONTAINING GAS ENRICHING MATERIAL AND PROCESSES OF MANUFACTURE AND USE

The present invention is directed to a porous, siliceous-containing material for separating or enriching one gas or condensible vapor from one or more other gases and/or condensible vapors in a gaseous mixture and the processes of making and using the porous material.

Sundry types of membranes enable the separation of one gas or condensible vapor from one or more other gases and/or vapors in a gas mixture. These types of membranes include: polymer membranes, glass membranes, and composite or multicomponent membranes. The application of these membranes to separating gases addresses the need to enrich, separate, or isolate one gas from another in areas such as: chemical processing, petroleum processing, oxygen replenishing or carbon dioxide removal from air in sealed vehicles such as airplanes, space vehicles and submarines.

One example of the usefulness of separation or enriching membranes in the chemical process industry is the separation of helium from methane. Helium is not present in nature in pure form but only as a component of gaseous mixtures, both naturally occurring as in natural gas and artificially occurring as in by-product gas mixtures. The most widely used commercial process for separating helium from natural gas involves low temperature fractionation. Since helium is normally found in natural gas in concentrations of around 400 parts per million to 8 volume percent of natural gas, this separation process requires cooling of extremely large quantities of gas to temperatures low enough to liquify all of the gases except helium. The size of such a plant and the expensive equipment involved provides an impetus for utilizing membranes to separate helium from methane. Other examples in the area of chemical or petroleum processing include: removal of acid gases from fuel gas sources and synthesis gas in the area of gasification of fossil fuels, separation of carbon dioxide in the presence of acid gases (secondary oil recovery), oxygen separations from chlorine in chlorine production are azeotrope breaking. Also the membranes find application in gas analysis by their incorporation into analytical gas analyzing instruments.

Materials that are candidates for membranes must meet both physical and chemical requirements as well as yielding good membrane requirements. The physical property requirements include: good performance in the areas of tensile strength, tear strength, abrasion resistance, flexibility, dimensional stability for a wide range of thermal and chemical conditions, stress crack resistance, strength to withstand compaction in high-pressure utilization, good toughness and morphological stability for a reasonable period of time. Some chemical property requirements involve good performance in such areas as stability to withstand temperature fluctuations, chemical resistance, and maintenance of morphology and microstructure even under severe pressure changes. In addition, the materials should exhibit good membrane properties of selectivity with adequate permeability. The right combination of permeability and selective separation and the thinnest possible form available embodies a membrane that would be useful in the gas enrichment or separation areas.

The glass membranes in the form of porous thimbles in multicomponent membranes proved useful in the gas separations of: hydrogen from hydrogen sulfide, and helium from methane. Researchers at the National Chemical Laboratory for Industry in Japan reported the separation of a helium and carbon dioxide gas mixture by means of a porous glass membrane in the form of a thimble utilizing cocurrent flow in a temperature range of 296 to 947° (564.8°F - 1,736.6°F). Researchers at the State Scientific-Research Institute of Glass; State Scientific-Research Institute of the Nitrogen Industry in the Soviet Union reported silica-rich highly porous glasses, approximately 96% $SiO_2$ in the form of microporous glass tubes were useful as semi-permeable membranes. In this work, the unchanging permeability coefficient in numerous experiments indicated the free-molecule character of the gas flow through the glass. Also it has been shown that the high-purity, nonporous silica glass membranes can purify helium from natural gas and other sources since this smallest of gas molecules (2 Angstrom) can pass through the membrane via defects in the glass structure. German researchers (British Patent No. 1,271,811) utilizing a porous substrate with a nonporous glass glazing were successful in separating helium from methane. In the aforementioned work with porous high-silica containing glasses, heat treatable borosilicate glass compositions were used which are known as "Vycor" glass compositions available from Corning Glass Works. This composition has an amount of boron oxide in the range of about 20 to 35 weight percent and an amount of soda of 4 to 12 weight percent with the balance being silica. These glass compositions are phase separable upon heat treatment and are leachable to remove a majority of the boron oxide and alkali metal oxides to leave around 96 weight percent silica-rich material.

In the area of membranes used for gas enrichment or separation, additional enhancements of this technology await the development of thinner, yet stronger membranes with uses under wider temperature conditions and with improved chemical durability.

## SUMMARY OF THE INVENTION

The present invention in its three aspects includes:
a gas separation and/or enrichment material that is at least one porous, silica-rich, hollow, inorganic fiber;
a process of making the gas separation and/or enrichment material;
a process of separating or enriching at least one gas or condensible vapor from a mixture of gases and/or condensible vapors.

The gas separation and/or enrichment material has a particular form and dimensions, composition and fine pore morphology. The form is a hollow and porous fiber having outer diameters in the range of around 1 to around 200 um or micrometers (microns) and wall thicknesses in the range of around less than 1 to around 50 microns. Suitable lengths for the hollow and porous fibers are those that are effective to permit a gaseous and/or vaporous mixture to contact one surface while permitting an enriched gaseous or vaporous stream to be collected at a second opposite surface of the hollow porous fiber. The silica-rich composition of the porous, hollow fibers results from leaching the acid and/or water soluble components of non-heat-treated glass fibers of various compositions. The glass fiber compositions range from those that are predominantly single phase like "E-glass" or "621-glass" types of fibers and hindered phase-separable borosilicate compositions containing at least one oxide of the Group IVB of the Periodic Chart of elements to those that are silica-containing compositions with an appreciable amount of about 20 to about 60 weight percent of acid and/or water soluble components selected from: the Group IVB oxides, $P_2O_5$, $Al_2O_3$, $Fe_2O_3$, PbO, alkali metal oxides, $SnO_2$, $B_2O_3$ and mixtures thereof with or without alkaline earth metal oxides. The fine pore morphology relates to pores having pore sizes in diameters in the range from around 1 to 50 Angstroms with a mean average pore size in the range of around 5 to 30 Angstroms. The pore sizes and the average pore size have good uniformity throughout the thin walls of the unsupported hollow fibers.

The process of making the hollow, porous fiber membrane involves: forming and leaching the non-heat-treated fibers. Formation of the hollow fibers occurs at attenuation rates of around 500 to 30.000 feet/min. The fiber issues from a bushing having orifices designed to deliver gas pressures sufficient to give the fiber an inner to outer diameter ratio of around 0.2 to around 0.95 and outer diameters in the range of 1 to around 200 micrometers and a wall thickness of around less than 1 to around 50 micrometers. The glass composition of the hollow fibers is essentially non-phase-separated like single phase or non-phase separated but phase-separable siliceous-containing glass compositions with at least 20 weight percent leachables. The leachables are materials soluble in acids, (other than hydrofluoric or phosphoric acid) and/or water soluble materials. The non-heat-treated hollow glass fibers are leached with such acids and/or water to extract those leachable materials. This produces the hollow, porous, silica-rich inorganic fiber membrane.

The process of separating gases and/or condensible vapors involves using the hollow and porous fibers so that the gaseous and/or vaporous mixture contacts one side of at least one of the porous, hollow fibers, and enriched or separated gas or vapor (permeate) is removed from the opposite side. If the gaseous mixture contacts the exterior surface of the porous hollow fiber, the lumen or interior surface of the hollow fiber is the opposite side. The gaseous or vaporous mixture is removed from the same side of the porous hollow fiber that it initially contacted. Either the lumen or the exterior surface of the hollow glass fiber can be the side for initial contact by the gaseous mixture. At least one porous hollow fiber is housed in a suitable apparatus to contain the gaseous mixture and to provide for removal of the gaseous mixture at one location and of the permeate from a separate location connected to the opposite side of the porous hollow fiber. The conditions of separating or enriching include: thermodynamic driving forces and temperatures ranging from sub-ambient to elevated temperatures below the softening point of the silica-rich fibers.

## DETAILED DESCRIPTION OF THE INVENTION

In the following description and in the claims, the following terms have the described meanings.

The term "gas" includes any condensible vapors where the vapors are condensible at conditions other than those used in feed gas streams to be enriched or separated.

3

The term "perm selective" means permeable to different extents to different molecular species under equal driving force.

The term "ultrafiltered type" means transport is partially by a porous mechanism but membrane penetrant interactions are also important.

The term "gas separation" means separations ranging from 100 percent separation to enrichment of a gas in any concentration over and above that of the original gaseous mixture.

The term "permability factor" represents the steady state rate of gas transmission through a membrane. Values for permeability factors are not ordinarily normalized for membrane thickness. For homogenous membranes, the permeability factor is inversely proportional to the sample thickness. When the thickness of the active part of the membrane is not known, e.g., in asymmetric membranes, the permeability factor is still a valid permeability characterization. The for permeability factor values determine the value-in-use of the membrane in permeation devices. The derivation of the equation for permeability factor is as follows: the volume of gas transmitted through a membrane is directly proportional to the area, time and pressure of the permeation test as:

Permeability factor = volume divided by area x time x pressure The units selected for volume, area, time and pressure are $cm^3$ (STP), $cm^2$, seconds and cm of mercury, respectively.

The term "separation factor" or "selectivity" for a membrane and for a given gaseous mixture including gases A, B, ....N is defined as the ratio of the permeability constant $(P_a)$ of the membrane for gas (A) to the permeability constant $(P_{others})$ of the membrane for the other gases in the mixture. The separation factor is also equal to the ratio of the permeability factor $(P_a/l)$ of a membrane of thickness "l" for gas "a" of a gas mixture to the permeability factors of the same membrane to the other gases $(P_{others}/l)$ wherein the permeability constant or permeability for a given gas is the volume of gas at standard temperature and pressure (STP) which passes through a membrane per square centimeter of surface area, per second, for a partial pressure drop of 1 centimeter of mercury across the membrane per unit of thickness and is expressed as $P = cm^3 . cm/cm^2 . second . cm$ mercury. In practice, the separation factor with respect to a given pair of gases in a binary gaseous mixture for a given membrane can be determined by employing numerous techniques which provide sufficient information for calculation of permeability constants or permeability factor for each of the gases in the binary mixture. Several of the many techniques available for determining permeability constants, permeabilities and separation factors are disclosed by the work entitled "Techniques of Chemistry", Vol. VII, Membranes & Separations, by Hwang et al., John Wiley & Sons, 1975, herein incorporated by reference at Chapter 12, pages 296-322.

The terminology "porous separation membrane" relates to membranes, which may have continuous porous channels for gaseous flow that communicate between the interior surface and the exterior surface, or which have numerous fine pores in the range of 1 to 50 Angstroms, where a majority of the pores interconnect. Also the term refers to porous materials, which have numerous pores in the range of 1 to 50 Angstroms where there may be interconnecting pores for gaseous flow that communicate between the interior surface and the exterior surface. In other words, the membrane has considerable internal void volume related to continuous porosity from one side of the membrane to the other.

The term "selectivity" is defined as the ratio of the rate of passage of the more readily passed component of a gaseous mixture to the rate of passage of the less readily passed components. Selectivity may be obtained directly by contacting a membrane with a known mixture of gases and analyzing the permeate. Alternatively, a first approximation of the selectivity can be obtained by setting up the ratio of the rates of passage of the two or more components determined separately on the same membrane. The rates may be expressed as GcB units.

Permeability can be measured by the variable pressure method or the variable volume method, both methods are well known to those skilled in the art.

The term "non-phase-separated" refers to single-phase glass compositions and to phase-separable glass compositions that can be cooled rapidly enough to prevent phase separation. The non-phase-separated glass composition includes non-heat-treated but phase-separable glass compositions that would phase-separate upon appropriate heat treatment subsequent to formation. Generally, non-phase-separated glass compositions are those in which the size of the composition fluctuations are less than the size of a critical nucleus of 20 angstroms. Mechanisms for describing the formation of new phases include the classical nucleation and growth mechanisms. Here, there is a sharp boundary between phases with a measurable interfacial energy and the new stable phase is defined by a critical nucleus size. For glasses, critical nucleus size has been estimated to be larger than 20A, as shown in "Direct Measurements of Homogeneous Nucleation Rates in a Glass-Forming System", J. J. Hammel, Jl. Chem. Physics, Vol. 46, No. 6, pp. 2234-2244 (1967), hereby incorporated by reference. Glasses can also phase separate by a mechanism of "Spinodal Decomposition" in which small fluctuations in composition grow rapidly when the glasses are in the spinodal region of a miscibility gap. Here, initially, there is no sharp boundary or interfacial energy between phases, and the inhomogeneities (or composition fluctuations) are points of maximum concentration of one component that gradually move to maximum concentration of the second component, e.g., $SiO_2$ to $B_2O_3$ in a borosilicate glass. This type structure is also found above the miscibility gap where there are similar fluctuations in composition even in a single phase glass melt. Therefore, glass structure in the initial stages of spinodal decomposition cannot be distinguished from the structure of a single phase glass. Sharp boundaries with measurable interfacial energies are a necessary requirement for two-phase systems (e.g., phase separated glass). These conditions are not approached in spinodal separating systems until the phases are at least the size of a critical nucleus of around 20 Angstroms. Here, a phase refers to a region that is formed by enlarging regions originally present in the glass fibers.

It is believed without limiting the scope of the invention that the porous, hollow, silica-rich fiber membranes of the present invention act as a membrane, where the gaseous separation is due to more than size exclusion and penetrant interactions but also includes interactions with the porous walls to give good permeability and good selectivity.

For a better understanding of the invention, the term "extractable" for a group of components refers to metal oxides and associated materials which are leachable from the glass fibers by water and/or acids other than hydrofluoric and phosphoric acids. These latter acids cannot be used since they attack silica. Also the term "non-extractable" for the group of components refers to silica and metal oxides of Group IV B of the Periodic Chart. These materials are not leachable from the glass by acids other than hydrofluoric and phosphoric acids. Also the terms "associated material" refers to an interconnected phase of reaction products of the components of the extractable group or the non-extractable group or of the components from both groups because of their proximity to each other in the glass fibers. Nonexclusive examples of associated materials include alkali metal borates, alkali metal aluminates, other interaction products with aluminum oxide and the like.

The porous, hollow, silica-rich fibers of the present invention are prepared from a formulated fiberizable, pore generating, glass forming batch composition. The batch composition is formulated to enable the resulting glass fibers to have a balance of the two groups of components, i.e., the extractable including associated materials and the non-extractable. Typical batch materials known to those skilled in the art can be used and calculated by known methods to produce the glass compositions with the components of the two groups. In the pore generating glass fiber composition, the components and affiliated materials of the extractable group are present in an amount of at least 20 to around 60 volume percent and include: one or more boron-containing materials; alkali metal oxides ($R_2O$); alkaline earth metal oxides like bivalent oxides (CaO, MgO); trivalent oxides like $Al_2O_3$, and $Fe_2O_3$ and oxides such as $TiO_2$, $SnO_2$, and $P_2O_5$. In addition, trace amounts of materials usually present in trace amounts in glass fibers can also be present like fluorine. The total amount of the components of the extractable group in the glass fibers is preferably at least 30 volume percent of the total glass composition. The presence of the $R_2O$ and/or $B_2O_3$ materials also serve as a fluxes in producing the glass fibers.

In the extractable group, the concentration of boron-containing material, boron oxides and/or anhydride and affiliated materials having boron, should not be too great that the softening point of the glass fibers decreases to cause the fibers to stick together during any heat treatment. This tackiness complicates the maintenance of individual fiber identity and, for discrete lengthy fibers, the maintenance of any near parallel alignment during subsequent processing steps.

The components of the non-extractable group include the siliceous material such as silica and any refractory glass modifiers like the tetravalent oxides of zirconium and/or titanium and/or hafnium.

Any phase-separable glass compositions (those that separate into phases upon heat treatment) within the range of the aforelisted compositions having little, if any, refractory glass can be used in the present invention. This includes those having high concentrations of boron-containing materials, i.e., around 40 to around 60 weight percent of the total glass composition. The hindered phase separable glass compositions (those that phase separate upon heat treatment but that contain a refractory glass modifiers) also are useable in the present invention. Both the phase-separable and the hindered phase-separable glass fibers are used in non-phase-separated form.

When the content of boron-containing material is 0 or slightly greater than zero, the amount of alkali metal oxides ($R_2O$) can be a major component in the extractable group. When the amount of boron-containing compound is in the range of less than 20 weight percent of the total resulting glass composition, one or more of the other aforelisted inorganic oxide components are present in the extractable group. When the amount of boron-containing material is around 35 weight percent and up to 60 weight percent of the total resulting glass composition, the boron-containing material components constitute the majority and the other inorganic oxide components constitute the minority of the extractable group.

Regarding the other components in the glass fiber that can be considered in the extractable group, the aluminum oxide can be present in an amount in the range of 0 to about 15 weight percent of glass composition. This amount is generally less for higher amounts of boron-containing materials in the glass fibers and larger for lower amounts of boron-containing materials in the glass fibers. The amount of $R_2O$ components range from less than one weight percent up to around 15 weight percent, when higher amounts of boron-containing components are present. Also there can be present, expecially with lower amounts of boron-containing components, calcium oxide (CaO) and magnesium oxide (MgO). The total amount of these components can be in the range of 0 to about 30 weight percent of the glass composition.

The amount of siliceous material should not be less than around 30 and preferably not less than 40 weight percent of the total glass composition. Generally, the siliceous material is less than around 80, preferably less than around 70 weight percent of the total glass composition. The metal oxides such as zirconium and/or titanium and/or hafnium can be present in amounts from 1 to about 20 weight percent of the glass composition. Preferably, zirconium oxide is present in an amount of up to about 8 weight percent. Since these oxides have good acid insolubility, they are present with silica in the porous hollow fiber. These metal oxides not only render porous fibers with good alkaline stability, but also enable substitution of the tetravalent oxides of zirconium and/or titanium and/or hafnium for one or more of the components of the extractable group. Their presence not only results in controlling porosity (by decreasing porosity without altering the amount of silica), but it also results in more alkaline stable, porous, silica-rich fibers.

A particularly useful glass composition for increased porosity is a phase-separable glass having a low silica and high-borate content. Generally these glasses have amounts in weight percent of silica at 30 to 50 percent by weight, boric oxide at 40 to 55 percent by weight, alkali metal oxide at 5 to 15 percent by weight, aluminum oxide from 0 to 4 weight percent and zirconium oxide about 1 to about 4 weight percent.

A suitable aluminum borosilicate - Group IV metal-containing glass fiber composition for generating a lower degree of porosity is the composition like "E-glass" or "621-glass" but with zirconium oxide and/or titanium oxide and/or hafnium oxide. These modified hollow glass fiber compositions have in weight percent: 45-56 silica, 5-13 boric oxide, 10-17 aluminum oxide, 13-24 calcium oxide, 0 to 6 magnesium oxide, 2-6 zirconium oxide, 0 to 6 titanium oxide and/or hafnium oxide along with less than around 1 percent of both fluorine and ferric oxide and $R_2O$. The 621 glass differs from E-glass in the presence of magnesium oxide in the former. The E-glass in the absence of magnesium oxide has an increased amount of calcium oxide. Preferably, the modified 621-glass is modified with zirconium oxide that is substituted for some aluminum oxide. The preferred glass fiber composition in weight percent is: 52-56 silica, 5 to 8 boric oxide, greater than 22 to 24 calcium oxide, less than 12 aluminum oxide, 2-5 zirconium oxide with less than 1 weight percent of each of the follow: fluorine, ferric oxide and sodium oxide. The extractable components can be removed from these non-phase-separated glass fiber compositions through acid leaching without any heat treatment. Also the standard "E-glass" and "621-glass" without the refractory glass modifier can be used.

A suitable alkali metal silica glass composition for forming hollow fibers has around 29 weight percent sodium oxide ($Na_2O$), 62 weight percent silica ($SiO_2$), and 9 weight percent zirconium oxide ($ZrO_2$). For these types of glass compositions, the amount of alkali metal oxide $R_2O$ can range from about 20 to about 40 weight percent and the amount of metal oxide of the Group IV metal can range from about 1 to about 20, preferably less than 12 weight percent $ZrO_2$, with the remainder being silica.

The glass batch compositions are melted in a furnace at temperatures and times to obtain a fiberizable viscosity for the molten glass without devitrification. Generally, the batch is heated to 2000°F (1093°C) to 3000°F (1649°C) for 1 to about 6 hours or longer. The molten glass is attenuated from the orifices of a bushing located on a forehearth connected to the furnace. The bushing has tubes aligned and associated with the orifices and connected to a supply of gas at a superatmospheric pressure to allow for a continuous flow of gas to the vicinity of the orifice. The flow of gas can be uniform to produce continuous glass fibers, or can be intermittent to produce intermittent hollow glass fibers. A further description of the production of hollow and intermittent glass fibers is given for a direct melt system in U.S. Patents 3,268,313; 3,421,873 and 3,526,487, all hereby incorporated by reference. In the alternative, a pre-mixed feed of raw materials is useful in making the glass fibers in a marble melt or indirect melt operation.

Preferably, the production of hollow glass fibers of the instant invention results in good concentricity of the central lumen of the fibers for two basic reasons.

First, the bushing tip is firmly affixed to the faceplate of the bushing. The aligned tube through which the gases are introduced to provide the central lumen of the glass fibers as they are being formed is also rigidly affixed to the bushing faceplate through a bracket member which forms a truss that prevents the tube from moving in any direction with respect to the faceplate itself. Thus, any warping of the faceplate during operation and consequent movement of the bushing tips carries with it an associated similar

6

movement of the tube or conduit so that the gas introduced through the gas tube is always being introduced to the molten glass emanating from channels in the bushing tip at the same location. The established lumen of the resulting fibers is thus readily maintained at its formed diameter as is the outside diameter of the fiber. This provides for uniform K values (outer diameter/inner diameter ratio) obtained in the fibers herein produced.

Secondly, it has been found that by introducing the air stream into the glass at the exit point of the tip and at a larger diameter than heretofore used, any characteristic bulging of the cone of the molten glass is avoided. Further, a more stable attenuation process is achieved, and uniform concentric holes are provided in the glass fibers formed as the molten glass emanates from the bushing tip. This occurs because the diameters of the air stream and glass stream at the tip are in approximately the same proportion as the desired end product. Once again, the lumen is centrally located and is constantly in the same position (regardless of whether or not the bushing faceplate distorts) due to the firm connection between the bracket member, the bushing faceplate and the tube. Glass can flow freely into an area above the bushing tips in all instances, where the tubes are being held, since the bracket member is completely open in between the spaces between tabs and also through the holes located in the top of the bracket member. Welds between the tube and the bracket member and the solid connection or button formed by the side arm tabs of the brackets in the hole provided in the faceplate for the tabs provide a rigid, secure, truss-type attachment so that there is no movement of the tubes when faceplate distorts over time. The attenuation of the glass fibers is conducted by mechanical means through winding or chopping. In winding, the fibers are grouped into a strand and wound onto a forming tube situated on a rotating mandrel of a winding apparatus. Any other method of forming and attenuating hollow fibers as known by those skilled in the art can also be used. As the fibers are attenuated at speeds on the order of around 500 to around 50,000 ft/min. into ambient temperature air, they are cooled, and they can be treated with water or cooled air for additional cooling. The hollow glass fibers are collected separately or are gathered into one or more strands, usually by means of a gathering shoe. The fibers or strands are wound onto a rotating drum-type winder having a forming tube to produce a forming package. The collet on which the forming package rides usually rotates at high speeds to collect the strand or strands into the forming package. Such speeds can be upward of 6,000 revolutions per minute which continues until the winder is slowed to a stop and a forming package is removed. An example of the gathering and collecting of the glass fibers into a forming package is disclosed in U.S. Patent 4,071,339 (Griffiths) and U.S. Patent 4,049,411 (Long and Dent) where attenuation speeds of from about 2,000 to 20,000 feet per minute are achieved; both patents are hereby incorporated by reference.

It is believed without limiting the present invention, that the fast attenuation speeds assist in providing an open glass structure in the fiber to facilitate extraction of acid and/or water extractable components. Also, it is believed that rapid cooling of the fibers assists in producing an open network structure which allows leachable components to be extracted in reasonable time periods.

The strands of the hollow glass fibers can comprise any number of fibers known to those skilled in the art. The proper combination of bushing tip size and attenuation speed results in hollow fibers with diameters in the range from 1 to around 200 microns (micrometers or um) and preferably from 1 to around 50 microns. Fibers with diameters larger than around 200 microns are difficult to wind. The fibers can have a K factor of up to around 0.96 but preferably in the range of around 0.5 up to about 0.96. Best results are obtained when the hollowness of the glass fiber comprises around 10 to around 70 percent of the volume of the glass fibers. Leached fibers having more than 70 percent of their volume that is hollow can be unstable because of thin walls. Finer fibers with outer diameters of less than 40 microns also are subject to such limitations on volume percentages of hollowness. Preferably, the hollowness is found in such a manner that the wall thickness is in the range of around 1 to around 30 microns and preferably from 1 to around 10 and most preferably around 1 to around 5 microns. If the wall thickness is too large, the rate in the subsequent leaching step will slow dramatically because of both the larger size and slower cooling rates during the formation of the thicker-walled fibers.

The hollow, non-phase-separated glass fibers and/or strands that are collected into the forms of multilayered packages, either forming packages or roving packages, or into the forms of chopped fibers or strands, chopped or continuous fiberous or strand mats or batts are treated for pore generation. The continuous fibers or strands may be removed from the collection packages by cutting transverse to or parallel with the axis of the package or by rewinding onto larger diameter drums or can remain in the package, mat, or batt form for the generation of pores. Preferably, the strands are cut from one or more multilayered packages by making one or more transverse cuts through the layers of the package. The length of the cut, hollow, glass fibers can be varied by varying the diameter of the forming package during winding of the hollow glass fibers or by rewinding the hollow glass fibers from the forming package onto a smaller or larger diameter package. The many layers of the hollow glass fibers which are removed from the package can be laid flat on a supporting surface. The supporting surface can be a plate or tray or moving conveyor belt. Generally, the discrete lengths of hollow glass fibers obtained by this approach can range from about 1 inch to around 25 inches. Any other method known to those skilled in the art for removing the glass fibers from the multilayered package can be employed. For example, the fibers can be unwound from the package and disposed as chopped strand or continuous strand onto another supporting surface or holder or rotating drum, like one with a 4 feet or 12 feet diameter. Preferably, the discrete lengths of glass fibers can range from about 0.25 inch (64 cm) to around 70 inches (180 cm) but most preferably only up to around 25 inches (64 cm).

Before the pores are generated in the hollow glass fibers as fibers or strands through extraction, any sizing composition present on the fibers can be removed through a solvent wash such as a water wash to remove a water soluble sizing composition. Preferably, any sizing composition that is present is not removed from the glass fibers.

The leaching to generate pores can be accomplished by several routes, depending upon whether the glass fiber composition has acid or water soluble extractables. The pores that are generated should have a diameter across some portion of the opening of the pore, whether the pore is circular, elliptical, cylindrical or asymmetrical in shape, to yield the desired mean pore diameter. The mean pore diameter of the pores generated can have a broad or narrow distribution. The generation of pores from the single-phase and the phase-separable but non-phase-separated glass fibers without heat treatment depends on at least the 20 weight percent extractables being present and the wall thickness being less than around 50 microns. Whether the acid and/or water leaching routes accomplish pore generation depends on whether the at least 20 weight percent extractables are acid or water soluble. Without heat treatment, the pores are generated by water and/or acid leaching for the glass fibers having the higher boron concentrations or having alkali metal oxide and by acid leaching for fibers with lower amounts of these materials. Hollow fibers having around greater than 45 weight percent boron-containing or alkali metal oxide-containing extractables can be made porous through water leaching. Also any of the phase-separable glass fibers yield porous fibers on water leaching followed by acid leaching.

The acid and/or water leaching can be conducted at a temperature ranging from sub-ambient to an elevated temperature of the boiling point of the acid or water. Preferably the temperature is in the range of ambient to around 95°C. The acid is any organic acid or any inorganic acid other than hydrofluoric and phosphoric acids. The concentrations of the acids can be in the range of around 0.1 Normal to 12 Normal for an acid having a pKa similar to hydrochloric acid. Acids with higher pKa's can be used in more dilute solutions and acids with lower pKa's can be used in higher concentrations. Also the water and/or acid leaching solution may have ions like those in an alkali metal borate solution to reduce stress cracking occurrences. The time of leaching depends on the composition, the temperature of leaching and the concentration of the acid. Generally, the time is as short as around 5 minutes for the water or acid leaching of glass fibers with high concentrations of boron-containing extractables. The time is also as long as around 24 hours to 72 hours for the E-glass or 621-glass compositions. Also it is preferred to have higher acid concentrations to reduce any attack on the nonextractable components of the glass fibers to result in hollow porous fibers with adequate strength. Maintenance of the concentration of the acid in a low acid pH range assists in providing favorable leaching kinetics to result in a complete or near complete leaching reaction.

The porous, hollow, silica-rich fibers of the invention, have around at least 75 weight percent silica and may have a minor amount of up to around 8 weight percent of the Group IV metal oxide which is preferably present in a substantial portion of non-siliceous material. Also trace amounts of other metal oxides originally present in the glass fibers may be present in the silica-rich fiber composition. The fibers have a mean pore diameter which can be controlled to be in the range of about 10 to about 200 angstroms from the various aforementioned compositions and extraction operations. The lengths vary from long chopped fibers of 1 to 25 inches to near continuous fibers. The porous fibers have a pore volume in the range of about 0.15 to about 0.75 cc/gm and fiber diameters from, most preferably, about 3 microns to about 50 microns. The pore diameter is in the range of around 1 to 200 angstroms, preferably 1 to 100 angstroms and most preferably 1 to 50 angstroms. The average pore diameter is less than 50 angstroms and preferably less than around 20 angstroms. The fiberous membrane has good uniformity of pore size, but can be further treated to result in asymmetric pore structures or morphology by heating to condense some pores or by selective leaching with acid or alkaline materials.

The hollow, porous, silica-rich fibers of the present invention can be used for gas separations in any gas separating apparatus known to those skilled in the art. For example, the gas separation apparatus utilized by those skilled in the art for separating gases with the use of hollow polymeric fibers can also be used with the porous, hollow, silica-rich fibers of the present invention. Any of these apparatus that provide contact between a gaseous mixture and either the exterior surface or the lumen of at least one of the hollow,

8

porous, silica-rich fibers and that provide for separate removal of the gaseous mixture and the permeate (separated gas) can be used. Removal of the permeate is from the opposite side of the fiber from which the gaseous mixture contacted the hollow, porous fiber. An example of an apparatus that can be used is that shown in the article entitled "Helium and Diffusion Separation", by K. B. McAfee, Jr., Bell Laboratories Record, Vol. 39, pg. 358, October, 1961, hereby incorporated by reference. An example of gases that can be separated from gaseous mixtures include: helium from natural gas or a 50/50 helium methane mixture; oxygen from an oxygen nitrogen mixture, carbon dioxide from a carbon dioxide methane mixture; oxygen from an oxygen chlorine mixture and acid gases from gaseous mixtures containing same.

## PREFERRED EMBODIMENT OF THE INVENTION

The glass forming fiberizable pore generating batch composition is formulated by back calculations to result in hollow glass fiber compositions that need not be phase-separated by heat treatment before leaching of the extractable components. It is also preferred that the glass fibers have zirconium oxide or titanium oxide balanced with aluminum oxide in an alkali metal borosilicate fiber glass composition to result in porous fibers with good alkaline tolerance.

The batch for forming glass fibers most preferably provides hollow fibers with a hindered phase-separable glass composition. The hollow glass fibers are formed by melting the batch at about 2600°F (1427°C) for around 3 hours and by mechanically attenuating the hollow glass fibers into air at ambient temperatures after conditioning the melted batch in the hollow fiber bushing melter at 2600°F (1427°C) for around one hour. The hollow fibers formed with good concentricity to have a diameter in the range of about 3 microns to about 100 microns and most preferably about 10 microns to about 40 microns and to have a wall thickness of around 1 to about 30 microns most preferably 1 to 5 microns. The hollow glass fibers are preferably sized with an aqueous chemical treating composition. The fibers are gathered into one or more strands and wound into a cylindrical forming package.

A plurality of undried forming packages are cut transverse to the longitudinal axis of the package so that all of the layers of glass fibers can be removed from the package. These fibers can be pulled taut and laid straight on trays or in crucibles or any suitable container for holding solids and fluids, where the fibers usually have a discrete length of about 25 inches (63.5 cm).

The non-phase-separated, hollow glass fibers are acid leached with agitation, in an acid solution, such as 0.1 to about 12 Normal, preferably, about 2 to 3 Normal hydrochloric acid, at temperatures around 50°C to 60°C, for about 20 minutes to about 48 hours, preferably about 4 to about 8 hours. In the acid leach, the hollow glass fibers are immersed in the acid bath for a sufficient period of time, at a sufficient temperature to remove a substantial amount, if not all, of the acid soluble boron-containing compounds in the glass fibers. The fibers typically may be submerged in the acid, when the acid is cool, and the temperature of the acid is increased to the elevated temperature. Nonexclusive examples of other suitable solutions of acids include nitric acid and other acids that give soluble, leachable products. The volume ratio of acid to glass fibers in the acid leaching step can be about 1 to about 100 volumes of acid to about one volume of hollow glass fibers but this ratio will vary somewhat with the normality of the acid. The hollow, silica-rich fibers are removed from the acid leaching solution, and they are water washed to a pH of around 5.5 to neutral in the wash water. Afterwards, the fibers are dried, preferably by air drying at a temperature of ambient to 50°C for around 10 minutes to about 24 hours. In addition, the fibers can be further dried by techniques known to those skilled in the art to result in uniform drying.

A plurality of the porous, hollow, silica-rich fibers are placed in a pressurizable container having an inlet and two outlets. One end of each fiber at the same side of the container is sealed. The unsealed side of each fiber is located in one of the outlets of the container. This allows for flow of the gaseous mixture into the container so that the permeate passes through and exits the porous hollow fibers and exits the container via the appropriate outlet of the container. The unseparated gaseous mixture exits the container at the other outlet and can be recirculated to the inlet.

The invention along with alternative embodiments are illustrated further in the following examples.

Table 1 presents 10 glass fiber compositions useful in producing leachable glass fibers for gas separation membranes.

Table 1

LEACHABLE FIBER GLASS COMPOSITION FOR MEMBRANES

| Examples Oxide | 1 | 2 | 3 | 4 | 5 | 6 | 7 | 8 | 9 | 10 |
|---|---|---|---|---|---|---|---|---|---|---|
| $SiO_2$ | 55.1 | 59.0 | 65.7 | 63.7 | 39.8 | 54.5 | 52.5 | 39.8 | 52.4 | 68.6 |
| $B_2O_3$ | 5.47 | 27.6 | 21.7 | 19.0 | 47.1 | 34.2 | 36.2 | 50.7 | 36.1 | 24.8 |
| $Na_2O$ | 0.76 | 8.5 | 8.3 | 10.3 | 9.0 | 7.0 | 7.0 | 9.4 | 7.0 | 5.0 |
| $ZrO_2$ | 0.035 | 3.3 | 2.0 | 2.0 | 3.0 | 3.0 | 3.0 | ----- | 3.0 | ----- |
| $Al_2O_3$ | 13.95 | 1.2 | 2.2 | 2.2 | 1.1 | 1.1 | 1.1 | ----- | 1.1 | 1.5 |
| CaO | 22.5 | ----- | ----- | 2.7 | ----- | ----- | ----- | ----- | ----- | ----- |
| $Fe_2O_3$ | 0.19 | 0.3 | ----- | ----- | ----- | ----- | ----- | ----- | 0.3 | 0.3 |
| Trace Materials[1] | 1.78 | 0.1 | 0.1 | 0.1 | ----- | 0.2 | 0.2 | 0.1 | 0.1 | ----- |
| % Leachables | 40.0 | 36.1 | 32.2 | 34.0 | 57.2 | 42.3 | 44.3 | 60.1 | 44.6 | 31.6 |

[1]Trace materials include such oxides as: MgO, $TiO_2$, $K_2O$, $Cr_2O_3$, SrO and BaO and fluorine

Examples 1 and 2 were formed into porous, hollow, fiber membranes according to the conditions given in Table 2.

## Table 2

### FORMATION OF HOLLOW POROUS FIBERS

| Examples from Table 1 | 1 | 2 |
|---|---|---|
| **Forming Conditions:** | | |
| Attenuation Speed (ft/min) | 3240 | 3800 |
| Bushing temperature (°F)/(°C) | 2246/1230 | 2095/1146 |
| Sizing | None | None |
| Air Tip Pressure (inches of $H_2O$) | 3.9 | 5.4 |
| OD/ID/Wall Thickness (microns) | 40/30/5 | 40/30/5 |
| Heat Treatment (°C/hr) | None | None |
| **Leaching Conditions:** | | |
| Acid/Normality | HCl/3 | HCl/3 |
| Temperature/time (°C/hr) | 55/24 | 55/1 |
| Glass Weight/Acid Volume (gm/ml) | 0.5/100 | 2/1000 |
| **Porous Fiber:** | | |
| Total Pore Volume (cc/gm) | 0.223 | -- |
| Vol. Avg. derived from Total Vol. | | |
| Average Pore Diameter (Angstroms) | 14.5 | -- |

The Examples 1 and 2 hollow, porous fibers were prepared according to the conditions listed in Table 2 in the following manner.

The hollow glass fibers were prepared from a single tip bushing designed with an extended air tube. The fibers were wound directly onto a cardboard forming tube. The air tip pressure from the extended air tube was 5.4 inches of water. A 6 inch long piece of non-heat-treated glass fibers (approximately 1 gram in weight) was leached for 30 minutes and 1,000 ml of 3 Normal hydrochloric acid contained in a Pyrex dish and held at a temperature of 55°C. for one hour. The sample is then rinsed repeatedly with deionized water.

In Table 2, the total pore volume and average pore diameter were determined through the use of a Micromeritics Digisorb 2600. The average pore diameter was calculated by an indirect method where the total pore volume was determined by the Micromeritics method, which also gives cumulative pore volume, and the average was determined from the addition of the pore volume data points and division by the number of data points.

A number of single fiber gas separation cells were constructed for the fibers of Examples 1 and 2 of Table 2 and a commercial polysulfone fiber. The capillary test cells were prepared by potting the single porous hollow fiber in the cell which was constructed with a 1/8 inch stainless steel tube approximately 2 inches (10 mm) long. An epoxy seal covered the fiber end internal to the cell and filling a short length, roughly about 0.5 mm of the fiber lumen to prevent gas from entering that end of the fiber. A second epoxy seal filled the space (except for a small vent fiber) between the wall of the steel capillary tube and the hollow fiber for a length of approximately 10 millimeters to prevent escape of the gaseous mixture. When the capillary inlet is connected by fittings to a source of pressurized gas feed mixture, the components must permeate the exposed walls of the hollow porous fiber (approximately 1 inch long) and travel the length of the lumen to escape as permeate flows from the exit end of the hollow porous silica-rich fiber. The capillary cell is oriented vertically with the fiber exit at the upper end so that a collection cell filled with water can be placed over the extended tip of the porous hollow fiber. The collection cell was a glass capillary tube having a 6 mm outside diameter and a 4 mm inner diameter which was sealed at one end and open at the other. The glass capillary was filled to overflowing with water so that the surface tension of the liquid allowed the glass capillary tube to be turned upside down over the extended hollow fiber from the capillary cell without any of the water dripping out. The permeate gas from the single fiber capillary test cell allowed for bubbling of permeate gas out of the exit end of the porous hollow fiber where the gap collected at the top end of the collection cell has a large bubble. The volumetric rate of water displacement was equated to permeate flux and a gas tight syringe was used to transfer a sample of the gas for analysis by gas chromatography. The permeability was calculated according to the formula $P/L$ = flux $(cm^2/seconds/fiber\ area)cm^2$ x pressure drop (cm mercury). The selectivity is the ratio of the permeability of the fastest permeating gas to that of the slower permeating gas.

Table 3 presents the data of the selectivities and permeabilities obtained for various gas separations for the porous hollow fibers of Examples 1 and 2. Also Table 3 presents comparative published data for gas separations by a commercial polysulfone fiber.

Table 3

SELECTIVITIES AND PERMEABILITY FOR POROUS HOLLOW FIBERS

| MEMBRANE MATERIAL | GAS MIXTURE | PRESSURE PSIG | AVERAGE PERMEATE FLUX | SELECTIVITY (Pfast/Pslow) | | ESTIMATED PERMEABILITY FACTOR (P/1) |
|---|---|---|---|---|---|---|
| | | | | actual | Knudsen predict | $\dfrac{cm^3 \times 10}{cm^2 - sec - cm\ Hg}$ |
| (POLY-SULFONE) | $H_2/CH_4$ 50/50 | | | 69-80 | 2.8 | $H_2$  57-75 |
| AS DESCRIBED IN U.S. PAT 4,472,175 AT TABLE 12 | $O_2/N_2$ (21/78) | | | 4.5 | 1.1 | $O_2$  6-9 |
| " | $CO_2/CH_4$ 50/50 | | | 30 | 1.6 | $CO_2$  24 |
| Example 2 from Table 2 | $He/CH_4$ 50/50 | 300 | 54 ul/min | 499 | 2.8 | He  $28 \times 10^{-6}$ |
| | $O_2/N_2$ 22/78 | 300 | 1.2 ul/min | 2.9 | 1.1 | $O_2$  0.64 |
| Example 1 from Table 2 | $He/CH_4$ 50/50 | 300 | --- | 3.0 | 2.8 | He  35 |
| | $O_2/N_2$ 22/78 | 300 | --- | 3.9 | 1.1 | $O_2$  0.67 |

In Table 3, the data were accumulated with a number of aforementioned single fiber capillary cells for each gas separation, and the average values are presented in Table 3. For example, the membrane material Example 2 from Table 2 in separating helium from the 50/50 mixture of helium and methane was tested in 6 single fiber capillary cells. The permeability factor P/L was calculated as follows:

P/L = permeate/flux [$cm^3$/seconds(stp)]/membrane area ($cm^2$) . delta p(cm mercury)

delta $P_{He}$ = (300 psi) 76 cm mercury/14.7 psi x 0.5 (for 50% helium in the gaseous mixture = 776 cm mercury)

membrane area for 3.8 cm fiber of 40 micron OD 30 micron ID gives an average radius of 17.5 microns and surface area is equal to 2 pi average radius L is equal to 0.042 $cm^2$

the permeate flux is equal to (.99A) (54 microliters) stp/minutes x $cm^3$/1000 microliters x minutes/60 seconds = $8.98 \times 10^{-4}$ $cm^3$ $cm^3$ (stp/seconds)

permeability factor is equal to $8.98 \times 10^{-4}$ $cm^3$ (stp/seconds)/$4.2 \times 10^{-2}$ $cm^3$ (776 cm mercury) = $2.8 \times 10^{-5}$ $cm^3$ (stp)/$cm^2$ x cm mercury is equal to $20 \times 10^{-6}$

selectivity $P_{He}/P_{CH-4}$ where the denominator (area x delta P) for each term in the ratio cancels since delta P is for helium and methane were equivalent in the 50/50 gaseous mixture resulting in selectivity equaling 99.8/0.2 = 499 for Example 2 from Table 2.

In a similar manner, Example 2 from Table 2 was used to separate oxygen from nitrogen in three single fiber capillary cells and the average values are presented in Table 3. Also Example 1 of Table 2 (621-glass) was tested in seven single fiber cells for the separation of helium from a gas mixture of helium and methane and oxygen from a gas mixture of oxygen and nitrogen mixture and the results are presented in Table 3.

For all of the separations of Table 3, the Knudsen separation factor was calculated based on the molecular weights of the gases being separated.

At the top of Table 3, there are presented published results for gas separations of a commercial polysulfone fiber.

From Table 3, the results show very good selectivity in the separation of the gases with a very good permeability factor, in some cases, better than the polysulfone by orders of magnitude and in other cases, comparable to the polysulfone membrane.

In accordance with the aforedescribed disclosure of hollow, porous, high silica fibers with fine pores and thin walls for separating gases from gaseous mixtures, we claim the following as our invention.

## Claims

1. A gas separation material, comprising:
at least one hollow, porous, non-crystalline, inorganic, silica-rich fiber having pore sizes within the range of about 1 to around 50 Angstroms in diameter, a mean average pore size of around less than 30 Angstroms in diameter, filament diameters in the range of 1 to around 200 micrometers and a wall thickness in the range of around 1 to around 50 micrometers, wherein the silica-rich fiber results from extracting extractable materials selected from the group consisting of acid and water extractable materials and mixtures thereof from non-heat-treated, hollow glass fibers, where the non-heat-treated, hollow glass fibers are formed by attenuation from melt at speeds in the range of at least 500 ft/min to around 50,000 ft/min and the glass fibers have a composition selected from the group consisting of leachable, single-phase and leachable, phase-separable fiberizable silicate glass compositions, both having at least 20 weight percent components soluble in acids, other than hydrofluoric and phosphoric, and/or water soluble components.

2. Article of Claim 1, wherein the leachable, silicate glass compositions are selected from the group consisting of phase-separable borosilicate glass fibers having one or more oxides of a metal from Group IVB of the Periodic Table, phase-separable borosilicate glass compositions with an amount of boron oxide in the range from less than 20 and greater than 35 up to around 60 weight percent of the glass fibers, and alkali metal silicate glass compositions.

3. Article of Claim 2, wherein the Group IVB metal oxide is zirconium.

4. Article of Claim 1, wherein the pore volume of the hollow, porous, silica-rich fiber is in the range of around 0.15 up to around 0.75 $cm^3$ per gram.

5. Article of Claim 1, wherein the fiber outer diameter is less than 100 microns ($\mu$m).

6. Article of Claim 1, wherein the fiber outer diameter is in the range selected from about 5 to about 30 microns ($\mu$m).

7. Article of Claim 1, wherein the fiber outer diameter is less than 50 microns ($\mu$m).

8. Article of Claim 1, wherein the attenuation speed of the hollow glass fibers is in the range of 1,000 ft/min to around 20,000 ft/min.

9. Article of Claim 1, wherein the wall thickness of the hollow glass fibers is less than 30 microns ($\mu$m).

10. Article of Claim 1, wherein the wall thickness of the hollow glass fibers is in the range of about 1 to about 5 microns ($\mu$m).

11. Article of Claim 1, wherein the inner diameter to outer diameter ratio of the hollow glass fibers is in the range of about 0.5 to about 0.95.

12. Article of Claim 1, wherein the mean pore size is less than 30 Angstroms in diameter.

13. Article of Claim 1, wherein the mean pore size is less than 20 Angstroms in diameter.

14. Article of Claim 1, wherein the acid extractable components are selected from the group consisting of $P_2O_5$, $Al_2O_3$, $Fe_2O_3$, PbO, $TiO_2$, $SnO_2$, ZnO, ZrO and $B_2O_3$ or mixtures thereof where the total acid extractable components are present in the range of around 20 to 60 weight percent of the glass fiber and where $B_2O_3$ is present as the predominant acid extractable component in the range of 15 to 60 weight percent.

15. Article of Claim 1, wherein the hollow, porous fibers are produced from non-heat-treated, glass fibers that are non-phase-separated.

16. A process of enriching at least one gas from a mixture of gases utilizing a porous, silica-rich membrane material, comprising:

using at least one hollow, porous, silica-rich, inorganic, hydrophilic fiber that is non-crystalline and has pore sizes within the range of 1 to around 50 Angstroms in diameter, a mean or average pore size of around 5 to 50 Angstroms in diameter, filament diameter in the range of around 1 to 200 microns and wall thickness in the range of around 1 to 50 microns, wherein the silica-rich fiber results from extracting at least 20 weight percent extractable components selected from the group consisting of components extractable with acids, other than hydrofluoric or phosphoric acids, and water extractable components or a mixture thereof, from non-heat-treated, hollow glass fibers formed by attenuation from melt at speeds in the range of at least 500 ft/min to around 50,000 ft/min where the glass fibers have a composition selected from the group consisting of leachable, single phase, fiberizable, glass compositions and leachable, phase-separable fiberizable glass compositions, both having at least 20 weight percent acid, other than hydrofluoric or phosphoric acid soluble components and/or water soluble components.

17. Process of Claim 16, wherein the leachable, non-heat-treated, silicate glass compositions are selected from the group consisting of: phase-separable borosilicate glass fibers having one or more oxides of a metal from Group IVB of the Periodic Table, phase-separable borosilicate glass compositions with an amount of boron oxide in the range from less than 20 and greater than 35 up to around 60 weight percent of the glass fibers, and alkali metal silicate glass compositions.

18. Process of Claim 16, wherein using the porous silica-rich membrane material includes:

contacting the gaseous mixture with one surface of the hollow, porous, silica-rich fiber at temperature in the range of below ambient to elevated temperatures and at a pressure in the range of about 1 to 5,000 psi; and

removing from the vicinity of the opposite surface of the hollow porous silica-rich fiber from that of the contact surface, a product enriched in at least one gas of said gaseous mixture.

19. Process of Claim 16, wherein helium is separated from the gaseous mixture selected from the group consisting of helium and methane, natural gas.

20. Process of Claim 16, wherein oxygen is separated from a gaseous mixture selected from the group consisting of oxygen and nitrogen, air, carbon dioxide containing air and oxygen and chlorine gaseous mixtures.

21. Process of Claim 16, wherein acid gases are removed from acid gaseous containing gaseous mixtures.

22. Process of Claim 16, wherein a plurality of fibers are used and the plurality is in the range of about greater than 1 to around 800.

23. Process of Claim 16, wherein the porous, silica-rich fibers result from non-heat-treated, hollow glass fibers that are non-phase-separated.

24. A gas separation material for enriching at least one gas from a gaseous mixture, comprising:

at least one hollow, porous, non-crystalline, inorganic, silica-rich fiber having pore sizes within the range of 1 to around 30 Angstroms in diameter and a mean average pore size in the range of around less than 20 Angstroms in diameter and a filament outer diameter in the range of around 4 micron ($\mu$m) to 40 microns ($\mu$m) and a wall thickness in the range of around 1 micron to 10 microns ($\mu$m), and an inner diameter to outer diameter ratio of around 0.5 to around 0.95 and where the silica-rich fibers result from extracting acid soluble components from the non-phase-separated, hollow glass fibers having a phase separable borosilicate glass fiber composition with one or more oxides of a metal of Group IVB of the Periodic Table.

23. Article of Claim 1, wherein the glass fiber composition is selected from the group consisting of E-glass, 621-glass where the glass fibers are attenuated at a speed of around 1,000 to 5,000 ft/min.

24. A process for producing a gas enriching membrane, comprising:

a) forming at least one non-phase-separated, hollow glass fiber having a composition selected from the group consisting of extractable, single-phase silicates and extractable phase-separable silicates both having an amount of at least 20 weight percent extractables by acids other than hydrofluoric or phosphoric acid, extractables or water extractables of at least 20 weight percent, where the hollow glass fibers have an outer diameter in the range of 1 to 200 microns (um) and have a wall thickness in the range of around 1 to around 30 microns (um) and have an inner to outer diameter ratio in the range of 0.5 to 0.95 and where the fibers are attenuated (formed) at a speed in the range of 500 to 50,000 feet/min. with rapid cooling of the fibers,

b) leaching the non-heat-treated, hollow glass fiber to remove extractables selected from the group consisting of acid soluble with acids other than hydrofluoric and phosphoric acids and water soluble and mixtures thereof to produce a porous, silica-rich, hollow fiber having pores with diameters from 1 to 50 A and with a mean pore diameter of less than 30 A and with a pore volume in the range of around 0.15 to around 0.75 cm³/gm.

16